# EUROPEAN PATENT SPECIFICATION

(11) **EP 3 450 058 B1**
(45) Date of publication and mention of the grant of the patent: **02.03.2022**
(21) Application number: 18188147.5
(22) Date of filing: 09.08.2018
(51) Int. Cl.: B22F 3/105, B29C 64/218, B29C 64/205, B29C 64/343, B33Y 30/00, B33Y 40/00, B22F 10/20, B22F 12/00

(54) **POWDER BED RE-COATER APPARATUS**
PULVERBETTNEUBESCHICHTERVORRICHTUNG
APPAREIL DE NOUVEAU REVÊTEMENT DE LIT DE POUDRE

(30) Priority: 28.08.2017 US 201715688426
(43) Date of publication of application: 06.03.2019
(73) Proprietor: General Electric Company, Schenectady, NY 12345 (US)
(72) Inventor: KELKAR, RAJENDRA, Cincinnati, OH Ohio 45215 (US); BARNHART, David, West Chester, OH Ohio 45069 (US)
(74) Representative: Hafner & Kohl PartmbB

(56) References cited:
- WO-A1-2015/155745
- DE-A1-102015 222 100
- US-A1- 2001 050 448
- US-A1- 2016 121 399
- US-A1- 2017 341 365

## Description

### Introduction

The present disclosure generally relates to methods and systems adapted to perform additive manufacturing ("AM") processes, for example by direct melt laser manufacturing ("DMLM"). The process utilizes an energy source that emits an energy beam to fuse successive layers of powder material to form a desired object. More particularly, the disclosure relates to methods and systems that utilize a recoater blades to distribute and smooth out the powder.

### Background

Additive manufacturing (AM) techniques may include electron beam freeform fabrication, laser metal deposition (LMD), laser wire metal deposition (LMD-w), gas metal arc-welding, laser engineered net shaping (LENS), laser sintering (SLS), direct metal laser sintering (DMLS), electron beam melting (EBM), powder-fed directed-energy deposition (DED), and three dimensional printing (3DP), as examples. AM processes generally involve the buildup of one or more materials to make a net or near net shape (NNS) object in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. As an example, a particular type of AM process uses an energy beam, for example, an electron beam or electromagnetic radiation such as a laser beam, to sinter or melt a powder material and/or wire-stock, creating a solid three-dimensional object in which a material is bonded together.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More specifically, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Electron beam melting (EBM) utilizes a focused electron beam to melt powder. These processes involve melting layers of powder successively to build an object in a metal powder.

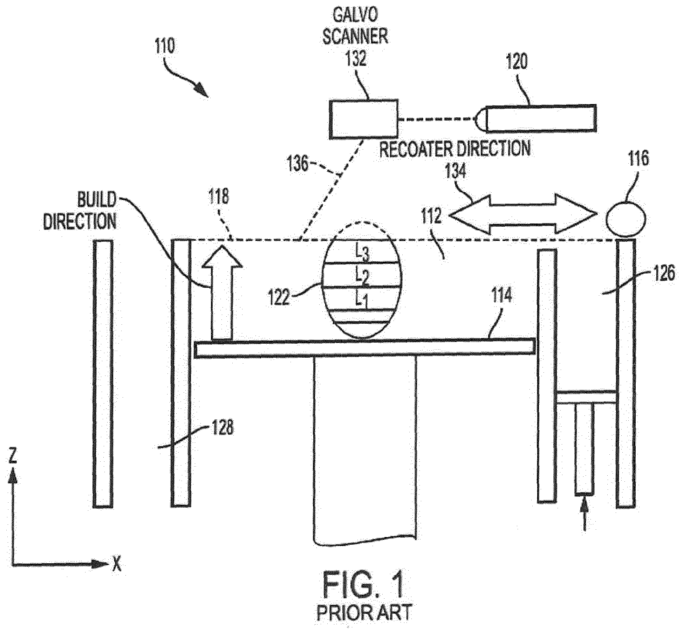

FIG. 1 is schematic diagram showing a cross-sectional view of an exemplary conventional system 110 for direct metal laser sintering (DMLS) or direct metal laser melting (DMLM). The apparatus 110 builds objects, for example, the part 122, in a layer-by-layer manner (e.g. layers L1, L2, and L3, which are exaggerated in scale for illustration purposes) by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer (e.g. layer L1) of the object being built under control of the galvo scanner 132. The build plate 114 is lowered and another layer (e.g. layer L2) of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of excess powder, for example, by blowing or vacuuming, machining, sanding or media blasting. Further, conventional post processing may involve removal of the part 122 from the build platform/substrate through machining, for example. Other post processing procedures include a stress release process. Additionally, thermal and chemical post processing procedures can be used to finish the part 122.

The abovementioned AM processes is controlled by a computer executing a control program. For example, the apparatus 110 includes a processor (e.g., a microprocessor) executing firmware, an operating system, or other software that provides an interface between the apparatus 110 and an operator. The computer receives, as input, a three dimensional model of the object to be formed. For example, the three dimensional model is generated using a computer aided design (CAD) program. The computer analyzes the model and proposes a tool path for each object within the model. The operator may define or adjust various parameters of the scan pattern such as power, speed, and spacing, but generally does not program the tool path directly. One having ordinary skill in the art would fully appreciate the abovementioned control program may be applicable to any of the abovementioned AM processes.

The above additive manufacturing techniques may be used to form a component from any material conducive to an AM process. For example polymers, ceramics and various plastics may be formed. Further, metallic objects can be formed from materials such as stainless steel, aluminum, titanium, Inconel 625, Inconel 718, Inconel 188, cobalt chrome, among other metal materials or any alloy, for example. The above alloys may further include materials with trade names, Haynes 188^{®}, Haynes 625^{®}, Super Alloy Inconel 625^{™}, Chronin^{®} 625, Altemp^{®} 625, Nickelvac^{®} 625, Nicrofer^{®} 6020, Inconel 188, and any other material having material properties attractive for the formation of components using the abovementioned techniques.

A problem that arises when making additive manufactured components is that, over the course of the build, a recoater blade mounted on the recoater arm may encounter surface features of the object being formed. Since the recoater blade is generally rigid so that it can smooth out the powder into a substantially even layer, if it encounters a surface feature the recoater blade may become damaged, or it may damage the surface feature. If the recoater blade is damaged, the AM process may need to be stopped so that the blade can be replaced, which results in significant downtime. Further, if the surface feature of the object is damaged, the object maybe have to be discarded and rebuilt. Sometimes, neither the blade nor the surface feature becomes damaged, but the surface feature stops the recoater from moving further (i.e. it becomes "jammed"). Thus, damage to a recoater blade and/or contact between the build surface and recoater blade can result in a significant loss in production efficiency. Therefore there is a need for a recoating system and apparatus that is less prone to contact between the blade and surface features of the component being built during an AM process.

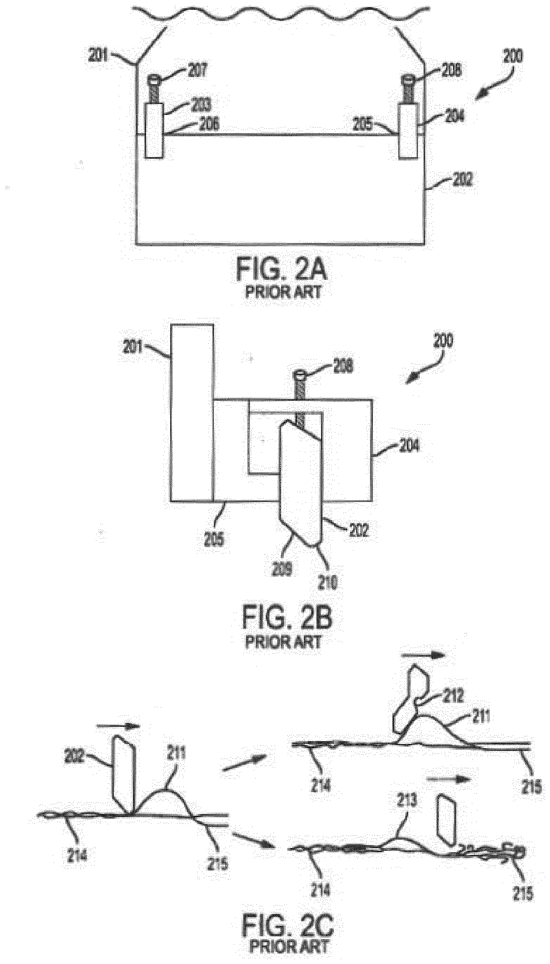

As shown in FIG. 2, in conventional systems such as those illustrated in Fig. 2, typically a fixed recoater is used, such as those illustrated in FIGS. 2A (frontal view) and 2B (side or profile view). As shown in FIG. 2A and 2B, a conventional recoater 200 comprises a recoater arm 201, a recoater blade 202, frontal clamp pieces 203 and 204, rear clamp pieces 205 and 206, and screws 207 and 208 that hold the blade 202 in place. The bottom of the blade 202 has a slant 209 and a beveled feature 210. As shown in FIG. 2C, when a conventional recoater experiences a force, for instance by encountering a surface feature 211, neither the recoater arm nor the recoater blade is easily displaceable away from the force, such that there may be at least one of at least two undesirable results. As shown at the top of right of FIG. 2C, if the recoater blade is not rigid enough relative to the hardness of the surface feature 211, then the recoater blade may become damaged or break, as shown by element 212. Alternatively, as shown at the bottom of FIG. 2C, if the recoater blade is too rigid relative to the hardness of the surface feature 211, then it may damage or break the surface feature 211, resulting in a damaged surface feature 213. This view also shows a smoothed layer of deposited powder 214 and an unsmoothed layer of deposited powder 215. A damaged surface feature, such as 213, may result in a low-quality part that has to be discarded and remade, resulting in a substantial loss of time and resources. A third result, not illustrated here, is that the force exerted by the surface feature simply stops the recoater completely, without anything breaking, i.e. it becomes "jammed." If a human operator is not monitoring the build process carefully, this situation could go undetected, resulting in damage to the entire apparatus and a significant loss of time. In general, the operator must choose the recoater blade in advance of the build operation, so the stiffness of the blade may not be optimal for all situations encountered during the recoating process. Therefore there is a need for a recoating system and apparatus that is less prone to letting the blade and/or surface features of the objects become damaged, and/or the jamming of the recoater blade.

During an AM process, a large percentage of problems are related to the abovementioned issues and/or other issues arising at the interface of the powder bed and the re-coater blade. As larger parts are manufactured using AM processes, even more issues arise as the formation of larger parts results in larger dimensional variations which may further exacerbate any problems associated with the supply of powder and the re-coater blade and powder bed interface. Thus, a need exists to further improve powder distribution and the interface of the powder bed and the re-coater blade. Further, compatibility issues with powders and powder size distribution can cause problems in prior re-coater blade and/or powder distribution systems. For example, the need to keep powder size consistent in a traditional apparatus results in an increase expense in sourcing powder. Further, there is a desire to use finer powder to increase resolution of the AM build, which previously may have not been usable with traditional powder recoating systems.

DE 10 2015 222 100 A1 discloses an additive manufacturing apparatus.

WO 2015/155745 A1 discloses an additive manufacturing apparatus.

US 2016/121399 A1 discloses an additive manufacturing apparatus.

US 2001/0050448 A1 discloses an additive manufacturing apparatus.

### Brief Description of the Invention

The invention is defined by the appended claims. The present disclosure is related to an apparatus that reduces the aforementioned undesirable situations. The present invention is related to an apparatus for making an object from powder comprising an energy directing device, a powder dispenser, and a set of recoater blades positioned to provide a layer of powder over a work surface by moving over the work surface, the thickness of the layer of powder determined by a powder distribution member and/or the height a set of blades above the work surface, wherein the recoater blades are mounted to allow movement of the blade height with respect to the work surface while providing the layer of powder over the work surface.

The apparatus provides powder during the additive manufacturing of a component, wherein the apparatus provides powder to at least a portion of component to be solidified, wherein the clearance between at least one of the first sweep strip and the second sweep strip and the component is less than 1 mm.

The apparatus includes at least a first sweep strip and the second sweep strip extending along a first direction. The first sweep strip includes a top portion connected to the apparatus and a bottom portion further from the apparatus than the top portion. The second sweep strip also includes a top portion connected to the apparatus and a bottom portion further from the apparatus than the top portion. The sweep strips may be adjusted so that the bottom portion of one of the first and second sweep strips extends further below the apparatus than the other of the first and second sweep strips.

The apparatus is configured to travel and supply a layer of powder along at least a first direction. When the first sweep strip is the forward sweep strip in the first direction and the second sweep strip is the aft sweep strip with relation to the first direction, the bottom portion of the first sweep strip may be adjusted to extend further below the apparatus than the second sweep strip. Conversely, when the second sweep strip is the forward sweep strip and the first sweep strip is the aft sweep strip with relation to the direction of travel, the bottom portion of the second sweep strip may be set to extend further below the apparatus than the first sweep strip.

The apparatus is described for supplying a powder used in an AM process. The apparatus comprises a powder reservoir, a first sweep strip, and a second sweep strip which may be located proximate to a powder bed and/or build component during an AM manufacturing process. The apparatus further includes a powder distribution system having an inlet for receiving powder form the reservoir and an outlet for supplying powder received from the inlet, wherein the outlet is located between the first sweep strip and the second sweep strip to better shield the powder from the operating environment of the apparatus (e.g. a gas flow within the apparatus provided during an AM manufacturing operation). The powder distribution system further includes a housing portion in fluid communication with the inlet and a roller rotatable around an axis within the housing, the axis extending in a first direction, wherein the roller is configured to convey powder from the inlet into the housing portion.

In the abovementioned aspects of the disclosure, the roller may be textured and/or may include a plurality of metering protrusions extending along the first direction. The textured portion and/or metering protrusions may be configured to convey powder to the outlet via a communication path in fluid communication with the outlet and the housing portion.

In another aspect of the disclosure, the roller may be textured and/or may include a plurality of metering protrusions extending along the first direction. The textured portion and/or metering protrusions may be configured to convey powder to a powder distribution member having a plurality of openings for supplying powder to the outlet of the apparatus.

In another aspect of the disclosure, the rollers may be textured and/or may include a plurality of metering protrusions extending along the first direction. The textured portion and/or metering protrusions may be configured to convey powder to a fluidizing chamber, the fluidizing chamber may include a fluidizing gas inlet, a fluidizing gas outlet, and a fluidizing powder device having a plurality of openings and an overflow portion for supplying powder to the abovementioned outlet. When powder is supplied to the fluidizing chamber by the abovementioned roller, and fluidizing gas is supplied from the fluidizing gas inlet though the plurality of openings, powder may overflow from the overflow portion to the outlet between the first and second sweep strips.

In each of the abovementioned aspects, the apparatus may further include a first height detector for detecting a height of the apparatus from the powder bed at a first location and a second height detector for detecting a height of the apparatus from a powder bed at a second location different from the first location. Based on at least the output of the first height detector and the second height detector, the flow of powder through the outlet is controlled using at least one of the abovementioned roller, powder distribution member, and/or the fluidizing chamber.

### Brief Description of the Drawings

The accompanying drawings, which are incorporated into and constitute a part of this specification, illustrate one or more example aspects of the present disclosure and, together with the detailed description, serve to explain their principles and implementations.
FIG. 1 is a conventional additive manufacturing apparatus;
FIG. 2A is a front view of a conventional, fixed recoater;
FIG. 2B is a side view of the conventional, fixed recoater shown in FIG. 2A;
Fig. 2C is a side view of various fixed recoater according to the prior art encounters a hard surface feature.
FIG. 3A is a cutaway side view of the recoater not part of the present invention;
FIG. 3B is a perspective view of the metering wheel usable with the recoater apparatus shown in FIG. 3A;
FIG. 4A is a cutaway side view of the recoater apparatus not part of the present invention,
FIG. 4B is a perspective view of the metering wheel and powder distribution screen usable with the recoater apparatus shown in FIG. 4A;
FIG. 5A is a cutaway side view of the recoater apparatus in accordance with one aspect of the invention;
FIG. 5B is a perspective view of the metering wheel and powder fluidizing device usable with the recoater apparatus shown in FIG. 5A.

### Detailed Description of the Invention

The detailed description set forth below in connection with the appended drawings is intended as a description of various configurations and is not intended to represent the only configurations in which the concepts described herein may be practiced.

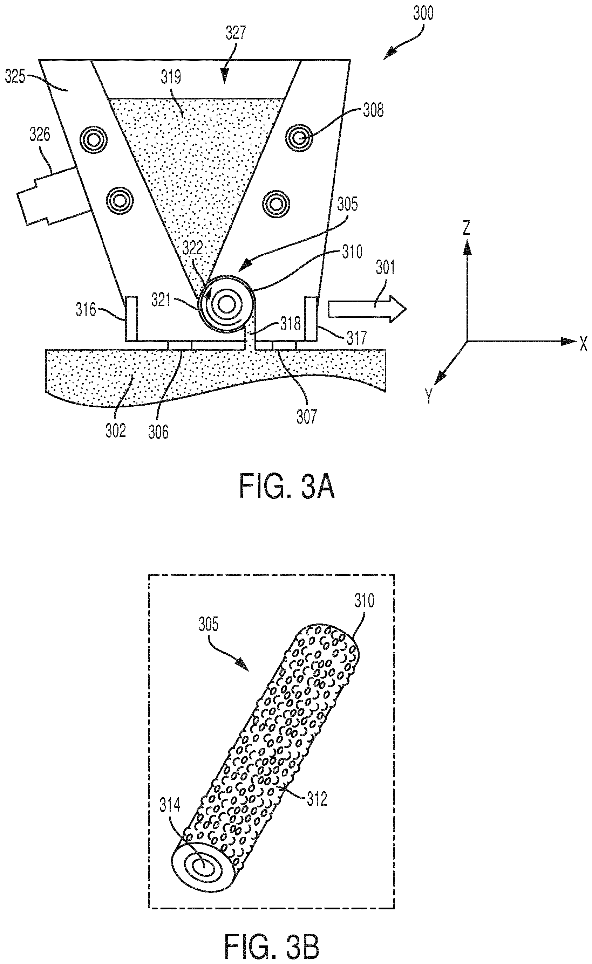

As shown in FIG. 3A, a recoater apparatus not part of the present invention 300 is mounted movably mounted to an AM apparatus. The recoater apparatus 300 includes a powder hopper 327 for holding a powder 319 for use in an AM process. The recoater apparatus may be mounted to a track system, and/or rail system, and/or a robotic arm such that the movement of the recoater apparatus 300 can be controlled along the x-axis, y-axis, and/or the z-axis, for example. As shown in FIG. 3A, the recoater apparatus may extend along the y axis and may move across a powder bed 302 in a direction 301 which may be perpendicular to the x-axis. The powder bed 302 may include powder and/or an at least partially fused and/or sintered component being built layer-by-layer as explained in the aforementioned description or any other method known in the art. For example, the present invention may be incorporated or combined with features of any powder bed additive manufacturing methods and systems. The following patent applications are an example of such additive manufacturing methods and systems and their use:

U.S. Patent Application Number 15/406,467, titled "Additive Manufacturing Using a Mobile Build Volume," with attorney docket number 037216.00059, and filed January 13, 2017;

U.S. Patent Application Number 15/406,454, titled "Additive Manufacturing Using a Mobile Scan Area," with attorney docket number 037216.00060, and filed January 13, 2017;

U.S. Patent Application Number 15/406,444, titled "Additive Manufacturing Using a Dynamically Grown Build Envelope," with attorney docket number 037216.00061, and filed January 13, 2017;

U.S. Patent Application Number 15/406,461, titled "Additive Manufacturing Using a Selective Recoater," with attorney docket number 037216.00062, and filed January 13, 2017;

U.S. Patent Application Number 15/609,965, titled "Apparatus and Method for Continuous Additive Manufacturing," with attorney docket number 037216.00102, and filed May 31, 2017;

U.S. Patent Application Number 15/406,471, titled "Large Scale Additive Machine," with attorney docket number 037216.00071, and filed January 13, 2017;

U.S. Patent Application Number 15/406,454, titled "Additive Manufacturing Using a Mobile Scan Area," with attorney docket number 037216.00060, and filed January 13, 2017;

U.S. Patent Application Number 15/610,214, titled "Method for Real-Time Simultaneous and Calibrated Additive and Subtractive Manufacturing," with attorney docket number 037216.00109, and filed May 31, 2017;

U.S. Patent Application Number 15/609,747, titled "Apparatus and Method for Real-Time Simultaneous Additive and Subtractive Manufacturing with Mechanism to Recover Unused Raw Material," with attorney docket number 037216.00110, and filed May 31, 2017.

The recoater apparatus 300 shown in FIG. 3A may include a frame 325 extending along the y-axis and having a dimension along the y-axis that is greater than the dimension of the recoater apparatus in the x-axis, for example. The frame may include a hopper 327 for containing a powder 319 to be distributed to the powder bed 302. The frame may further include heaters 308 for preheating the powder 319 in the hopper 327. The frame 325 may also include a powder distribution system 305. The powder distribution system 305 may comprise an axially rotatable textured roller 310, rotatable about an axis 314, and having surface cavities and/or protrusions 312 sized appropriately for the powder 319 being conveyed by the powder distribution system. The frame may include a housing portion 321 which may be cylindrically shaped and correspond with the outer dimensions of the rotatable textured roller 310. Accordingly, the cylindrical housing portion 321 may have a clearance so that an appropriately sized gap exists between the rotatable textured roller 310 and the cylindrical housing portion 321 for conveyance of the powder 319. The rotatable textured roller 310 may be connected to motor (e.g. a stepper motor). Accordingly, powder 319 may be in contact with the roller 310 through passage 322. Thus, when the roller 310 is rotated via the motor, powder is conveyed along the surface of the roller 310 to the powder supply exit 318. Accordingly, powder can be precisely supplied to the powder bed 302 as the recoater apparatus moves in direction 301.

As mentioned above, the recoater apparatus 300 shown in FIG. 3A may have the advantage compatibility with all traditional powders. Further, the recoater apparatus may be compatible with powders having a larger size distribution than would normally be desired, which has the advantage of decreasing the cost of the powder being used in the apparatus. For example, the roller texture, clearances within the recoater apparatus, and control of the motor may be optimized for compatibility with powders having a greater size distribution. Another advantage of the recoater apparatus configuration is compatibility with very fine powders. The recoater apparatus may be compatible with powders having a very fine size which may not be compatible with traditional recoater systems, which has the advantage of increasing the resolution of the built AM component. For example, the roller texture, clearances within the recoater apparatus, and control of the motor may be optimized for compatibility with fine powders.

The recoater apparatus may further include an aft sweep strip 306 and a forward sweep strip 307. The sweep strips 306 and 307 may be positioned such that the powder supply exit 318 is located between the sweep strips 306 and 307. Thus, the sweep strips 306 and 307 may function as a shield to block gas flow from interfering with the powder distribution process. The sweep strips may be adjustable along the z-axis either through height (i.e. z-axis) adjustment of the recoater apparatus 300, or the sweep strips may be individually adjustable along the z-axis through an individual adjustment mechanism on each of the forward and aft sweep strips. Further, the height of each of the forward sweep strip 307 and aft sweep strip 306 may be adjustable through tilting of the recoater apparatus in combination with the abovementioned height adjustment of the recoater apparatus 300. As discussed below, the sweep strips may be adjusted using any one of or combination of the aforementioned methods such that the sweep strips do not contact or minimally contact the powder bed while effectively blocking gas flow which may interfere with the powder distribution process. Further, the sweep strip height may be controlled to sweep powder across the powder bed. Each of the sweep strips may be comprised of a soft pliable material (e.g. a foam, silicone, rubber), a rigid or semi rigid material.

The sweep strips 307 and/or 306 may also be configured to remove a quantity of powder from a build region. For example, while a build process progresses by solidifying powder, a portion of the build may begin to increase in height at a faster rate than another portion of the build. In other words, with reference to FIG. 3A for example, a first portion of the build may extend further in the Z direction than a second portion of the build. Thus, if powder is continuously supplied and fused at the same rate at the first portion and the second portion the dimensions of the completed component may be effected and/or build problems may arise. In order to prevent such problems, as the component is being built, the sweep strips 307 and/or 306 may serve a leveling function by removing and/or limiting the supply of powder to the portion of the build that extends further in the Z direction, by selectively controlling the amount of powder that is supplied to each region (either using the below mentioned methods of supply and/or by removing powder via the sweep strips) a more consistent build may be achieved, and problems such as those discussed in the abovementioned background section may be avoided.

The recoater apparatus 300 may further include several sensors to assure that powder is precisely metered and distributed along the surface of the powder bed and/or the build component in the powder bed. As an example, the recoater apparatus 300 may include a photo-emitter-receiver pair to sense the consistency and uniformity of powder flow through the passage 322, the powder supply exit 318, and/or within the cylindrical housing portion. It is noted that the abovementioned sensor locations may be used in any combination to determine the amount of powder being supplied to the powder bed. Further, it is noted that a plurality of sensors may be located in each location, for example a plurality of sensors may be located along the y-axis direction to assure detect the amount of powder being supplied along the width of the powder bed along the length of the recoater apparatus 300. The sensors may also include an aft z-height sensor array 316 and a forward z-height sensor array 317 to precisely monitor the height of the recoater apparatus 300 with respect to the powder bed and/or to determine a height difference between the forward z-height sensor 317 and the aft z-height sensor 316 with respect to the powderbed, which may be used to determine the thickness of the layer of powder provided by the recoater apparatus to the powder bed 302. The forward z-height sensor array 317 and the aft z-height sensor array 316 may be capacitive proximity sensors. The forward z-height sensor array 317 and the aft z-height sensor array 316 may also include or be combined with any well-known sensors in the art usable to determine a height in a non-contact manner. The abovementioned forward z-height sensor array 317 and the aft z-height sensor array 316 may be used to adjust the height of the recoater apparatus 300 and/or may be used to adjust the quantity or distribution of powder to be supplied to the powder bed 302 through the powder supply exit 318.

As discussed above, outputs from the forward z-height sensor array 317, aft z-height sensor array 316, photo-emitter-receiver pair in the passage 322, the photo-emitter-receiver pair in the powder supply exit 318, and/or within the cylindrical housing portion may be processed by a controller to continuously adjust the output to the motor connected to the rotatable textured roller 310. Thus, by controlling the rotation of the textured roller 310 the powder 319 can be precisely distributed along the powder bed 302 and/or build component as the recoater travels in direction 301 across the powder bed 302.

Based on the output of any of the mentioned sensors, the forward sweep strip 307 and the aft sweep strip 306 may be adjusted such that the a bottom portion of the forward sweep strip 307 that is further from the apparatus than a top portion of the forward sweep strip 307 is offset with relation to the bottom portion of the aft sweep strip 306 (i.e. lower in the z-direction). In other words, because a layer of powder is supplied from the opening to the powder bed and/or component being built in the powder bed, it may be preferable to adjust the aft sweep strip 306 in the z-direction to compensate for the thickness of the layer of powder provided. If the recoater apparatus reverses direction (i.e. causing the aft sweep strip to become the forward sweep strip), it may be necessary to adjust the sweep strip height in a similar manner (i.e. the forward sweep strip lower in the z-direction that the aft sweep strip). Using any of the abovementioned techniques, it may be further preferable to adjust the sweep strip heights such that a clearance in the z-direction between the powder bed and/or build component and the sweep strips is less than 1 mm.

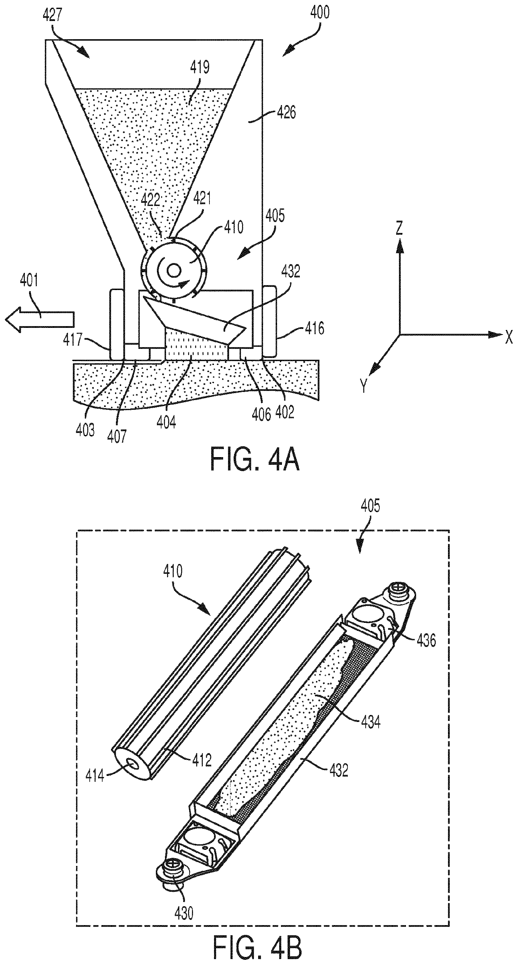

As shown in FIG. 4A the recoater apparatus not part of the present invention 400 may include a frame 426 extending along the y-axis and having a dimension along the y-axis that is greater than the dimension of the recoater apparatus in the x-axis, for example. The frame may include a powder reservoir 427 for containing a powder 419 to be distributed to the powder bed 402. The frame may further include heaters (e.g. similar to heaters 308 shown in FIG. 3A) for preheating the powder 419 in the powder reservoir 427. The reservoir may further include an ultrasonic transducer 326 (see e.g. FIG. 3A) for controlling the movement of powder within the reservoir 427. Further, the frame 425 may also include a powder distribution system 405. The powder distribution system 405 may comprise an axially rotatable dosing roller 410, rotatable about an axis 414, and having metering blades 412 extending along the axis of the roller and sized appropriately for the powder 419 being conveyed by the powder distribution system. It is noted that as an alternative the metering roller may include channels and/or metering blades that are curved or corkscrew shaped. Further, the metering roller may include surface irregularities and/or cavities and protrusions similar to those shown in FIG. 3B. The frame may include a cylindrical housing portion 421 which corresponds with the outer dimensions of the rotatable metering roller 410. Accordingly, the cylindrical housing portion 421 may have a clearance so that an appropriately sized gap exists between the rotatable metering roller 410 and the cylindrical housing portion 421 for conveyance of the powder 419.

The rotatable metering roller 410 may be connected to motor (e.g. a stepper motor). Accordingly, powder 419 may be in contact with the roller 410 through passage 422. Thus, when the roller 410 is rotated via the motor, powder is conveyed along the surface of the roller 410 to the powder distribution member 432. As shown in FIG. 4B, the powder distribution member 432 may be trough shaped and include a screen 434 or a series of openings along the bottom surface of the distribution member 432 for allowing powder to fall through. The distribution member 432 may be mounted to the recoater apparatus 400 via rubber mounts 430 or any other mount that allows the screen to be connected to the recoater while still allowing vibration of the distribution member. The distribution member 432 may include a single or a plurality of ultrasonic transducers 436. The single or plurality ultrasonic transducers, along with rotation of the metering wheel can be controlled to precisely supply the powder 419 contained in the powder reservoir 427 to the powder bed 402 as the recoater apparatus moves in direction 401.

As mentioned above, the recoater apparatus 400 shown in FIG. 4A may have the advantage compatibility with all traditional powders. Further, the recoater apparatus may be compatible with powders having a larger size distribution than would normally be desired, which has the advantage of decreasing the cost of the powder being used in the apparatus. For example, the roller features, clearances within the recoater apparatus, size of the openings in the distribution member, the ultrasonic transducer control, and control of the motor may be optimized for compatibility with powders having a greater size distribution. Another advantage of the recoater apparatus configuration is compatibility with very fine powders. The recoater apparatus may be compatible with powders having a very fine size which may not be compatible with traditional recoater systems, which has the advantage of increasing the resolution of the built AM component. For example, the roller features, clearances within the recoater apparatus, size of the openings in the distribution member, the ultrasonic transducer control, and control of the motor may be optimized for compatibility with fine powders.

The recoater apparatus may further include an aft sweep strip 406 and a forward sweep strip 407. The sweep strips 406 and 407 may be positioned such that the powder distributed by the distribution member 432 to the powder bed proximal to location 404 is between the sweep strips 406 and 407. Thus, the sweep strips 406 and 407 may function as a shield to block any gas flow from interfering with the powder distribution process. Optionally, the sweep strips may be adjustable along the z-axis either through height (i.e. z-axis) adjustment of the recoater apparatus 400, or the sweep strips may be individually adjustable along the z-axis through an individual adjustment mechanism on each of the forward and aft sweep strips. Further, the height of each of the forward sweep strip 407 and aft sweep strip 406 may be adjustable through tilting of the recoater apparatus 400 in combination with the abovementioned height adjustment of the recoater apparatus 400. As discussed below, the sweep strips may be adjusted using any one of or combination of the aforementioned methods such that the sweep strips do not contact or minimally contact the powder bed while effectively blocking gas flow which may interfere with the powder distribution process. Further, the sweep strip height may be controlled to sweep powder across the powder bed.

The sweep strips 407 and/or 406 may also be configured to remove a quantity of powder from a build region. For example, while a build process progresses by solidifying powder, a portion of the build may begin to increase in height at a faster rate than another portion of the build. In other words, with reference to FIG. 4A for example, a first portion of the build may extend further in the Z direction than a second portion of the build. Thus, if powder is continuously supplied and fused at the same rate at the first portion and the second portion the dimensions of the completed component may be effected and/or build problems may arise. In order to prevent such problems, as the component is being built, the sweep strips 407 and/or 406 may serve a leveling function by removing and/or limiting the supply of powder to the portion of the build that extends further in the Z direction, by selectively controlling the amount of powder that is supplied to each region (either using the below mentioned methods of supply and/or by removing powder via the sweep strips) a more consistent build may be achieved, and problems such as those discussed in the abovementioned background section may be avoided.

The recoater apparatus 400 may further include several sensors to assure that powder is precisely metered and distributed along the surface of the powder bed and/or the build component in the powder bed. As an example, the recoater apparatus may include a photo-emitter-receiver pair (not shown) to sense the consistency and uniformity of powder flow through the passage 422, the powder supply exit proximal to location 404, and/or within the cylindrical housing portion 421. It is noted that the abovementioned sensor locations may be used individually or in any combination to determine the amount of powder being supplied to the powder bed. Further, it is noted that a plurality of sensors may be located in each location, for example a plurality of sensors may be located along the y-axis direction to assure detect the amount of powder being supplied along the width of the powder bed along the length of the recoater apparatus 400. The sensors may also include an aft z-height sensor array 416 and a forward z-height sensor array 417 to precisely monitor the height of the recoater apparatus 400 with respect to the powder bed and/or to determine a height difference and/or clearance between the sweep strips 407 and 406 and powder bed at the forward z-height sensor 417 at location 403 and the aft z-height sensor 416 at location 402, which may be used to determine the amount of powder to be provided by the recoater apparatus to the powder bed 402 through control of the metering wheel 410 and the distribution member 432. The forward z-height sensor array 417 and the aft z-height sensor array 416 may be capacitive proximity sensors. The forward z-height sensor array 417 and the aft z-height sensor array 416 may also include or be combined with any well-known sensors in the art usable to determine a height in a non-contact manner. The abovementioned forward z-height sensor array 417 and the aft z-height sensor array 416 may be used to adjust the height of the recoater apparatus 400 and/or may be used to adjust the quantity or distribution of powder to be supplied to the powder bed 402 through the powder supply exit 418.

As discussed above, outputs from the forward z-height sensor array 417, aft z-height sensor array 416, photo-emitter-receiver pair in the passage 422, the photo-emitter-receiver pair in the powder supply exit 404, and/or within the cylindrical housing portion 421 may be processed by a controller to continuously adjust the output to the motor connected to the rotatable metering roller 410 and/or the ultrasonic transducers on the powder distribution member 432. Thus, by controlling the rotation of the metering roller 410 and/or powder distribution member 432, the powder 419 can be precisely distributed along the powder bed 403 at location 404 and/or at the build component as the recoater travels in direction 401 across the powder bed.

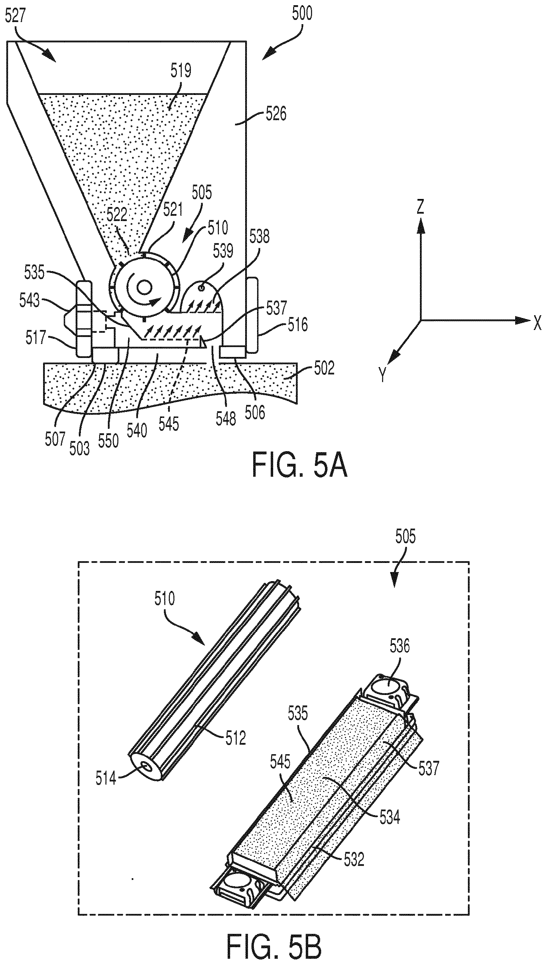

As shown in FIG. 5A the recoater apparatus of the present invention 500 may include a frame 526 extending along the y-axis and having a dimension along the y-axis that is greater than the dimension of the recoater apparatus in the x-axis, for example. The frame includes a powder reservoir 527 for containing a powder 519 to be distributed to the powder bed 502. The frame may further include heaters (e.g. similar to heaters 308 shown in FIG. 3A) for preheating the powder 519 in the powder reservoir 527. The frame 525 also includes a powder distribution system 505. The powder distribution system 505 comprises an axially rotatable dosing roller 510, rotatable about an axis 514, and having metering blades 512 extending along the axis of the roller and sized appropriately for the powder 519 being conveyed by the powder distribution system. It is noted that as an alternative the metering roller may include channels and/or metering blades that are curved or corkscrew shaped. Further, the metering roller may include surface irregularities and/or cavities and protrusions similar to those shown in FIG. 3B. The frame may include a cylindrical housing portion 521 which corresponds with the outer dimensions of the rotatable metering roller 510. Accordingly, the cylindrical housing portion 521 may have a clearance so that an appropriately sized gap exists between the rotatable metering roller 510 and the cylindrical housing portion 521 for conveyance of the powder 519.

The rotatable metering roller 510 may be connected to motor (e.g. a stepper motor). Accordingly, powder 519 may be in contact with the roller 510 through passage 522. Thus, when the roller 510 is rotated via the motor, powder is conveyed along the surface of the roller 510 to the powder distribution member 538 (see e.g. FIG. 5). As shown in FIG. 5A, , the powder distribution member 538 may include a fluidizing portion 550. The fluidizing portion 550 may include a fluidized bed portion 534. The fluidized bed portion 534 may be trough shaped and include a bottom portion 545 having a screen and/or mesh portion, for example. As an alternative, or in combination with a screen and/or mesh portion, the bottom portion 545 may have a series or pattern of openings. The fluidizing bed portion may include a guiding angled portion 535 for guiding powder from the metering roller 510 into the fluidizing bed. The fluidizing bed 534 further includes an overflow portion 537 which is substantially adjacent to an opening 548 for supplying powder to the powder bed 502. The fluidizing portion 550 may include a fluidizing gas inlet 543 and a fluidizing gas outlet 539. A fluidizing gas may be supplied through the fluidizing gas inlet 543 to control the flow of the powder supplied from the rotatable metering roller 510 to the opening 548 by controlling the overflow of powder over the overflow portion 537. The fluidizing gas may exit the fluidizing portion 550 through the fluidizing gas outlet 539. The fluidizing bed and/or the fluidizing member may be mounted to the recoater apparatus 500 via rubber mounts 530 or any other mount that allows the fluidizing bed to be connected to the recoater while still allowing vibration of the distribution member. Further, the fluidizing bed and/or fluidizing portion may include a seal 532 that prevents the fluidizing gas from escaping from the perimeter of the of the fluidizing portion and/or fluidizing bed while allowing vibration of the fluidizing bed. The fluidizing portion 550 and/or the fluidizing bed 534 may include a single or a plurality of ultrasonic transducers 536. The single or plurality ultrasonic transducers 536, along with rotation of the metering roller 510, and the inflow of fluidizing gas through inlet 543 and/or the exit of fluidizing gas through outlet 539 can be controlled to precisely supply the powder 519 contained in the powder reservoir 527 to the powder bed 502 as the recoater apparatus 500 moves across the powder bed.

As mentioned above, the recoater apparatus 500 shown in FIG. 5A may have the advantage compatibility with all traditional powders. Further, the recoater apparatus may be compatible with powders having a larger size distribution than would normally be desired, which has the advantage of decreasing the cost of the powder being used in the apparatus. For example, the roller features, clearances within the recoater apparatus, the fluidizing portion, the ultrasonic transducer control, and control of the motor may be optimized for compatibility with powders having a greater size distribution. Another advantage of the recoater apparatus configuration is compatibility with very fine powders. The recoater apparatus may be compatible with powders having a very fine size which may not be compatible with traditional recoater systems, which has the advantage of increasing the resolution of the built AM component. For example, the roller features, clearances within the recoater apparatus, size of the openings in the distribution member, the fluidizing portion, the ultrasonic transducer control, and control of the motor may be optimized for compatibility with fine powders.

The recoater apparatus further includes an aft sweep strip 506 and a forward sweep strip 507. The sweep strips 506 and 507 may be positioned such that the powder distributed by the distribution member 505 to the powder bed proximal to location 540 is between the sweep strips 506 and 507. Thus, the sweep strips 506 and 507 may function as a shield to block gas flow from interfering with the powder distribution process. Optionally, the sweep strips may be adjustable along the z-axis either through height (i.e. z-axis) adjustment of the recoater apparatus 500, or the sweep strips may be individually adjustable along the z-axis through an individual adjustment mechanism on each of the forward and aft sweep strips. Further, the height of each of the forward sweep strip 507 and aft sweep strip 506 may be adjustable through tilting of the recoater apparatus 500 in combination with the abovementioned height adjustment of the recoater apparatus 500. As discussed below, the sweep strips may be adjusted using any one of or combination of the aforementioned methods such that the sweep strips do not contact or minimally contact the powder bed while effectively blocking gas flow which may interfere with the powder distribution process. Further, the sweep strip height may be controlled to sweep powder across the powder bed.

The recoater apparatus 500 may further include several sensors to assure that powder is precisely metered and distributed along the surface of the powder bed and/or the build component in the powder bed. As an example, the recoater apparatus may include a photo-emitter-receiver pair (not shown) to sense the consistency and uniformity of powder flow through the passage 522, the powder supply exit proximal to location 548, within the fluidizing portion 550, and/or within the cylindrical housing portion 521. It is noted that the abovementioned sensor locations may be used individually or in any combination to determine the amount of powder being supplied to the powder bed. Sensors may also be located at the fluidizing gas inlet and outlet to so that the supply of fluidizing gas may monitored and controlled. Further, it is noted that a plurality of sensors may be located in each of the above-mentioned locations, for example a plurality of sensors may be located along the y-axis direction to assure detect the amount of powder being supplied along the width of the powder bed along the length of the recoater apparatus 500. The sensors may also include an aft z-height sensor array 516 and a forward z-height sensor array 517 to precisely monitor the height of the recoater apparatus 500 with respect to the powder bed and/or to determine a height difference and/or clearance between the sweep strips 507 and 506 and powder bed at the forward z-height sensor 517 at location 503 and the aft z-height sensor 516 at location 502, which may be used to determine the amount of powder to be provided by the recoater apparatus to the powderbed 502 through control of the metering wheel 510 and the distribution member 432. The forward z-height sensor array 517 and the aft z-height sensor array 516 may be capacitive proximity sensors. The forward z-height sensor array 517 and the aft z-height sensor array 516 may also include or be combined with any well-known sensors in the art usable to determine a height in a non-contact manner. The abovementioned forward z-height sensor array 517 and the aft z-height sensor array 516 may be used to adjust the height of the recoater apparatus 500 and/or may be used to adjust the quantity or distribution of powder to be supplied to the powder bed 502 through the powder supply exit 548.

Based on the output of the abovementioned sensors, the forward sweep strip 507 and the aft sweep strip 506 may be adjusted such that the a bottom portion of the forward sweep strip 507 that is further from the apparatus than a top portion of the forward sweep strip 507 is offset with relation to the bottom portion of the aft sweep strip 506 (i.e. lower in the z-direction). In other words, because a layer of powder is supplied from the opening to the powder bed and/or component being built in the powder bed, it may be preferable to adjust the aft sweep strip 506 in the z-direction to compensate for the thickness of the layer of powder provided. If the recoater apparatus reverses direction (i.e. causing the aft sweep strip to become the forward sweep strip), it may be necessary to adjust the sweep strip height in a similar manner (i.e. the forward sweep strip lower in the z-direction that the aft sweep strip). Using any of the abovementioned techniques, it may be further preferable to adjust the sweep strip heights such that a clearance in the z-direction between the powder bed and/or build component and the sweep strips is less than 1 mm

The sweep strips 503 and/or 506 may also be configured to remove a quantity of powder from a build region. For example, while a build process progresses by solidifying powder, a portion of the build may begin to increase in height at a faster rate than another portion of the build. In other words, with reference to FIG. 5B for example, a first portion of the build may extend further in the Z direction than a second portion of the build. Thus, if powder is continuously supplied and fused at the same rate at the first portion and the second portion the dimensions of the completed component may be effected and/or build problems may arise. In order to prevent such problems, as the component is being built, the sweep strips 503 and/or 306 may serve a leveling function by removing and/or limiting the supply of powder to the portion of the build that extends further in the Z direction, by selectively controlling the amount of powder that is supplied to each region (either using the below mentioned methods of supply and/or by removing powder via the sweep strips) a more consistent build may be achieved, and problems such as those discussed in the abovementioned background section may be avoided.

As discussed above, outputs from the forward z-height sensor array 517, aft z-height sensor array 516, photo-emitter-receiver pair in the passage 522, the photo-emitter-receiver pair in the powder supply exit 504, the fluidizing portion 550, the fluidizing gas inlet 543, the fluidizing gas outlet 539, and/or within the cylindrical housing portion 521 may be processed by a controller to continuously adjust the output to the motor connected to the rotatable metering roller 510, the supply of fluid to the fluidizing gas inlet 543 and/or the fluidizing gas outlet 539, and/or the ultrasonic transducers 536. Thus, by controlling abovementioned variables in powder distribution member 505, the powder 519 can be precisely distributed along the powder bed 502 at location in a vicinity of portion 540 and/or at the build component as the recoater 500 travels across the powder bed 502.

## Claims

1. An apparatus for supplying a powder comprising:
a powder reservoir (527);
a first sweep strip (507);
a second sweep strip (506); and
a powder distribution system (505) comprising:
an inlet (522) for receiving powder from the powder reservoir;
an outlet ( 548) for supplying powder received from the inlet, the outlet being located between the first sweep strip (507) and the second sweep strip (506);
a housing portion (521) in fluid communication with the inlet (522);
a metering roller (510) rotatable around an axis ( 514) within the housing, the axis extending in a first direction; and
a fluidizing portion (550) vertically positioned beneath the inlet and the metering roller (510) and vertically positioned above a powder bed ( 502), wherein the fluidizing portion includes an overflow portion (537) adjacent to the outlet for supplying powder (519) to the outlet, wherein:
the metering roller ( 510) is configured to convey powder from the inlet to the fluidizing portion;
wherein the powder is supplied to the fluidizing portion by the metering roller ( 510), and the powder is fluidized in the fluidizing portion by a fluidizing gas; and
the fluidized powder overflows from the overflow portion (537) to the outlet (539) between the first and second sweep strips.

2. The apparatus for supplying a powder of claim 1, wherein the metering roller ( 510) is textured.

3. The apparatus for supplying a powder of any one of claims 1 - 2, wherein the metering roller ( 510) has a plurality of metering protrusions extending along the first direction.

4. The apparatus for supplying a powder of any one of claims 1-3, wherein the metering roller (510) is configured to convey powder ( 519) to the fluidizing portion (550) via a communication path in fluid communication with the fluidizing portion (550) and the housing portion (, 521).

5. The apparatus for supplying a powder of any one of claims 1-4, further comprising:
a first height detector ( 516) for detecting a height of the apparatus from the powder bed ( 502) at a first location, wherein the quantity of powder supplied at the outlet is controlled based on an output from the first height detector (516).

6. The apparatus for supplying a powder of claim 5, further comprising:
a second height detector ( 517) for detecting a height of the apparatus from the powder bed at a second location ( 502) different from the first location, wherein the quantity of powder supplied at the outlet ( 548) is controlled based on an output from the first height detector (516) and the second height detector (517).

7. The apparatus for supplying a powder of any one of claims 3-6, wherein the fluidizing portion (550) further comprises:
a plurality of openings for supplying powder to the outlet, wherein powder is supplied to the fluidizing portion (550) by the metering roller (510).

8. The apparatus for supplying a powder of claim 7, wherein the powder distribution system further comprises at least one vibrating member ( 536) capable of vibrating the fluidizing portion (550).

9. The apparatus for supplying a powder of any one of claims 1-8, wherein the fluidizing portion further comprises:
a fluidizing gas inlet (543);
a fluidizing gas outlet (539); and
a fluidizing bed (534) having a plurality of openings (545) and the overflow portion (537) for supplying powder to the outlet (548), wherein the fluidizing gas is supplied from the fluidizing gas inlet (543) through the plurality of openings (545), wherein the fluidized powder overflows from the overflow portion (537) to the outlet (539).

10. The apparatus for supplying a powder of claim 9, wherein the fluidizing bed further comprises at least one vibrating element (536), wherein the vibrating element is capable of vibrating the fluidizing bed (534).

11. The apparatus of any one of claims 1-10, wherein the apparatus is configured to provide powder to an additive manufacturing machine.

12. The apparatus of any one of claims 1-12, wherein the apparatus is configured to adjust a height of at least one of the first sweep strip and second sweep strip to remove powder from a first portion of a build region.

13. An additive manufacturing machine for additively manufacturing a component in a build region, the additive manufacturing machine comprising an apparatus for supplying a powder according to any of claims 1 - 12, wherein the apparatus for supplying a powder is configured to provide powder to at least a portion of a component to be solidified, wherein the clearance between at least one of the first sweep strip (507) and the second sweep strip ( 506) and the component is less than 1 mm.

## Patentansprüche

1. Vorrichtung zum Zuführen eines Pulvers, umfassend:
einen Pulverbehälter (527)
einen ersten Sweep-Streifen (507)
einen zweiten Sweep-Streifen (506); und
ein Pulververteilungssystem (505), umfassend:
einen Einlass (522) zum Aufnehmen von Pulver aus dem Pulverbehälter;
einen Auslass (548) zum Zuführen des vom Einlass erhaltenen Pulvers, wobei der Auslass zwischen dem ersten Sweep-Streifen (507) und dem zweiten Sweep-Streifen (506) angeordnet ist;
einen Gehäuseabschnitt (521) in Fluidverbindung mit dem Einlass (522);
eine Dosierrolle (510), die um eine Achse (514) innerhalb des Gehäuses drehbar ist, wobei sich die Achse in eine erste Richtung erstreckt; und
einen Fluidisierungsabschnitt (550), der vertikal unter dem Einlass und der Dosierrolle (510) und vertikal über einem Pulverbett (502) angeordnet ist, worin
der Fluidisierungsabschnitt einen Überlaufabschnitt (537) neben dem Auslass zum Zuführen von Pulver (519) zu dem Auslass umfasst
die Dosierrolle (510) so konfiguriert ist, dass sie Pulver vom Einlass zum Fluidisierungsabschnitt fördert;
worin das Pulver dem Fluidisierungsabschnitt durch die Dosierrolle (510) zugeführt wird, und das Pulver in dem Fluidisierungsabschnitt durch ein Fluidisierungsgas fluidisiert wird; und
das fluidisierte Pulver aus dem Überlaufteil (537) zum Auslass (539) zwischen dem ersten und zweiten Sweep-Streifen überläuft.

2. Vorrichtung zum Zuführen eines Pulvers nach Anspruch 1, worin die Dosierrolle (510) eine Struktur aufweist.

3. Vorrichtung zum Zuführen eines Pulvers nach einem der Ansprüche 1 bis 2, worin die Dosierrolle (510) eine Vielzahl von Dosiervorsprüngen aufweist, die sich entlang der ersten Richtung erstrecken.

4. Vorrichtung zum Zuführen eines Pulvers nach einem der Ansprüche 1 bis 3, worin die Dosierrolle (510) so konfiguriert ist, dass sie Pulver (519) über einen Verbindungspfad, der in Fluidverbindung mit dem Fluidisierungsabschnitt (550) und dem Gehäuseabschnitt (521) steht, zum Fluidisierungsabschnitt (550) befördert.

5. Vorrichtung zum Zuführen eines Pulvers nach einem der Ansprüche 1 bis 4, ferner umfassend:
einen ersten Höhendetektor (516) zum Erfassen einer Höhe der Vorrichtung vom Pulverbett (502) an einer ersten Stelle, worin die am Auslass zugeführte Pulvermenge auf der Grundlage einer Ausgabe des ersten Höhendetektors (516) gesteuert wird.

6. Vorrichtung zum Zuführen eines Pulvers nach Anspruch 5, ferner umfassend:
einen zweiten Höhendetektor (517) zum Erfassen einer Höhe der Vorrichtung von dem Pulverbett an einer zweiten Stelle (502), die sich von der ersten Stelle unterscheidet, worin die an dem Auslass (548) zugeführte Pulvermenge auf der Grundlage einer Ausgabe von dem ersten Höhendetektor (516) und dem zweiten Höhendetektor (517) gesteuert wird.

7. Vorrichtung zum Zuführen eines Pulvers nach einem der Ansprüche 3 bis 6, worin der Fluidisierungsabschnitt (550) ferner umfasst:
eine Vielzahl von Öffnungen zum Zuführen von Pulver zum Auslass, worin Pulver durch die Dosierrolle (510) dem Fluidisierungsabschnitt (550) zugeführt wird.

8. Vorrichtung zum Zuführen eines Pulvers nach Anspruch 7, worin das Pulververteilungssystem ferner mindestens ein Vibrationselement (536) umfasst, das in der Lage ist, den Fluidisierungsteil (550) in Schwingungen zu versetzen.

9. Vorrichtung zum Zuführen eines Pulvers nach einem der Ansprüche 1 bis 8, worin der Fluidisierungsabschnitt ferner umfasst:
einen Fluidisierungsgaseinlass (543);
einen Fluidisierungsgasauslass (539); und
ein Fluidisierungsbett (534) mit einer Vielzahl von Öffnungen (545) und dem Überlaufabschnitt (537) zum Zuführen von Pulver zu dem Auslass (548), worin das Fluidisierungsgas von dem Fluidisierungsgaseinlass (543) durch die Vielzahl von Öffnungen (545) zugeführt wird, worin das fluidisierte Pulver von dem Überlaufabschnitt (537) zu dem Auslass (539) überfließt.

10. Vorrichtung zum Zuführen eines Pulvers nach Anspruch 9, worin das Fluidisierungsbett ferner mindestens ein Vibrationselement (536) umfasst, worin das Vibrationselement in der Lage ist, das Fluidisierungsbett (534) in Schwingungen zu versetzen.

11. Vorrichtung nach einem der Ansprüche 1 bis 10, worin die Vorrichtung so konfiguriert ist, dass sie einer Maschine zur additiven Fertigung Pulver zuführt.

12. Vorrichtung nach einem der Ansprüche 1 bis 12, worin die Vorrichtung so konfiguriert ist, dass sie eine Höhe des ersten Sweep-Streifens und/oder des zweiten Sweep-Streifens einstellt, um Pulver von einem ersten Teil eines Baubereichs zu entfernen.

13. Additive Herstellungsmaschine zur additiven Herstellung eines Bauteils in einem Baubereich, wobei die additive Herstellungsmaschine eine Vorrichtung zum Zuführen eines Pulvers gemäß einem der Ansprüche 1 bis 12 umfasst, worin die Vorrichtung zum Zuführen eines Pulvers so konfiguriert ist, dass sie mindestens einen Teil eines zu verfestigenden Bauteils mit Pulver versorgt, worin der Abstand zwischen mindestens einem von dem ersten Sweep-Streifen (507) und dem zweiten Sweep-Streifen (506) und dem Bauteil weniger als 1 mm beträgt.

## Revendications

1. Appareil pour fournir une poudre, comprenant :
un réservoir de poudre (527)
une première bande de balayage (507)
une seconde bande de balayage (506) ; et
un système de distribution de poudre (505) comprenant :
une entrée (522) destinée à recevoir de la poudre du réservoir de poudre ;
une sortie (548) destinée à fournir la poudre reçue de l'entrée, la sortie étant située entre la première bande de balayage (507) et la seconde bande de balayage (506) ;
une portion de logement (521) en communication fluidique avec l'entrée (522) ; un rouleau doseur (510) rotatif autour d'un axe (514) à l'intérieur du logement, l'axe s'étendant dans une première direction ; et
une portion de fluidisation (550) positionnée verticalement sous l'entrée et le rouleau doseur (510) et positionnée verticalement au-dessus d'un lit de poudre (502),
la portion de fluidisation incluant une portion de trop-plein (537) adjacente à la sortie pour fournir de la poudre (519) à la sortie, dans lequel :
le rouleau doseur (510) est conçu pour convoyer de la poudre de l'entrée vers la portion de fluidisation ;
la poudre étant fournie à la portion de fluidisation par le rouleau doseur (510), et la poudre étant fluidisée dans la portion de fluidisation par un gaz de fluidisation ; et
la poudre fluidisée débordant de la portion de trop-plein (537) vers la sortie (539) entre la première et la seconde bande de balayage.

2. Appareil pour fournir une poudre selon la revendication 1, dans lequel le rouleau doseur (510) est texturé.

3. Appareil pour fournir une poudre selon l'une quelconque des revendications 1-2, dans lequel le rouleau doseur (510) comporte une pluralité de saillies de dosage s'étendant le long de la première direction.

4. Appareil pour fournir une poudre selon l'une quelconque des revendications 1-3, dans lequel le rouleau doseur (510) est conçu pour convoyer la poudre (519) vers la portion de fluidisation (550) via une voie de communication en communication fluidique avec la portion de fluidisation (550) et la portion de logement (521).

5. Appareil pour fournir une poudre selon l'une quelconque des revendications 1-4, comprenant en outre :
un premier détecteur de hauteur (516) destiné à détecter une hauteur de l'appareil depuis le lit de poudre (502) à un premier emplacement, la quantité de poudre fournie à la sortie étant contrôlée sur la base d'un débit de sortie depuis le premier détecteur de hauteur (516).

6. Appareil pour fournir une poudre selon la revendication 5, comprenant en outre :
un second détecteur de hauteur (517) destiné à détecter une hauteur de l'appareil depuis le lit de poudre (502) à un second emplacement, la quantité de poudre fournie à la sortie (548) étant contrôlée sur la base d'un débit de sortie depuis le premier détecteur de hauteur (516) et le second détecteur de hauteur (517).

7. Appareil pour fournir une poudre selon l'une quelconque des revendications 3-6, dans lequel la portion de fluidisation (550) comprend en outre :
une pluralité d'ouvertures pour fournir de la poudre à la sortie, la poudre étant fournie à la portion de fluidisation (550) par le rouleau doseur (510).

8. Appareil pour fournir une poudre selon la revendication 7, dans lequel le système de distribution de poudre comprend en outre au moins un élément vibrant (536) capable de faire vibrer la portion de fluidisation (550).

9. Appareil pour fournir une poudre selon l'une quelconque des revendications 1-8, dans lequel la portion de fluidisation comprend en outre :
une entrée de gaz de fluidisation (543) ;
une sortie de gaz de fluidisation (539) ; et
un lit fluidisé (534) comportant une pluralité d'ouvertures (545) et la portion de trop-plein (537) pour fournir de la poudre à la sortie (548), le gaz de fluidisation étant fourni depuis l'entrée de gaz de fluidisation (543) à travers la pluralité d'ouvertures (545), la poudre fluidisée débordant de la portion de trop-plein (537) vers la sortie (539).

10. Appareil pour fournir une poudre selon la revendication 9, dans lequel le lit fluidisé comprend en outre au moins un élément vibrant (536), l'élément vibrant étant capable de faire vibrer la portion de fluidisation (534).

11. Appareil selon l'une quelconque des revendications 1-10, l'appareil étant conçu pour fournir de la poudre à une machine de fabrication additive.

12. Appareil selon l'une quelconque des revendications 1-12, l'appareil étant conçu pour ajuster une hauteur d'au moins une parmi la première bande de balayage et la seconde bande de balayage pour éliminer de la poudre d'une première portion d'une région de fabrication.

13. Machine de fabrication additive destinée à fabriquer additivement un composant dans une région de fabrication, la machine de fabrication additive comprenant un appareil destiné à fournir une poudre selon l'une quelconque des revendications 1-12, l'appareil pour fournir une poudre étant conçu pour fournir de la poudre à au moins une portion d'un composant à solidifier, la distance entre au moins l'un parmi la première bande de balayage (507) et la seconde bande de balayage (506) et le composant étant inférieure à 1 mm.
